# EUROPÄISCHE PATENTSCHRIFT

(11) **EP 0 596 234 B1**
(45) Veröffentlichungstag und Bekanntmachung des Hinweises auf die Patenterteilung: **20.12.1995**
(21) Anmeldenummer: 93115309.2
(22) Anmeldetag: 23.09.1993
(51) Int. Cl.: B60R 13/02

(54) **Autohimmel für die Dachinnenverkleidung eines Personenkraftwagens oder Kleinbusses**
Headliner for the inner side roof lining of a passenger vehicle or a small bus
Panneau pour la garniture intérieure de pavillon d'une voiture ou d'un petit bus

(30) Priorität: 05.11.1992 DE 4237344
(43) Veröffentlichungstag der Anmeldung: 11.05.1994
(73) Patentinhaber: BENEFORM GmbH, D-31224 Peine (DE)
(72) Erfinder: Müser, Hermann, Dr., D-40885 Ratingen (DE); Kiesel, Gerd H., Dr. Ing., D-30827 Garbsen (DE); Blume, Wilfried, D-30419 Hannover (DE); Meyer, Dieter, D-30900 Wedemark (DE)
(74) Vertreter: Patentanwälte Thömen & Körner

(56) Entgegenhaltungen:
- EP-A- 0 057 886
- EP-A- 0 248 199
- DE-U- 1 933 971
- US-A- 4 950 534

## Beschreibung

Die Erfindung betrifft einen Autohimmel für die Dachinnenverkleidung eines Personenkraftfahrzeugs oder Kleinbusses nach dem Oberbegriff des Anspruchs 1 (Autohimmel z. B. nach der EP-A-0 248 199).

Ein Autohimmel für die Dachinnenverkleidung eines Personenkraftfahrzeugs oder Kleinbusses dient dazu, das Dach als Karosserieteil optisch abzudecken, eine Wärmedämmung gegen das metallene Dach zu schaffen und den Innenraum des Kraftfahrzeugs zu verschönern und akustisch zu dämpfen.

Da Personenkraftfahrzeuge oder Kleinbusse im Interesse einer niedrigen Schwerpunktlage und eines geringen Luftwiderstandes eine möglichst geringe Höhe aufweisen sollen, andererseits den Insassen aber ausreichend Kopffreiheit verbleiben muß, werden Autohimmel unmittelbar am Dach oder in unmittelbarer Nähe zum Dach angeordnet.

Während in großräumigen Fahrzeugen, wie Schiffen, Flugzeugen oder Bussen bereits Frischluft oder klimatisierte Luft zu den einzelnen Fahrgastplätzen gefördert wird und durch über den Sitzen angeordnete Austrittsöffnungen individuell und direkt zu den Insassen gelangt, sind bei kleineren Kraftfahrzeugen lediglich in der Armaturentafel oder bei Personenkraftfahrzeugen der Oberklasse zusätzlich in Wand oder Bodenverkleidungen Austrittsöffnungen für Frischluft oder klimatisierte Luft vorhanden.

Die Art der Zufuhr von Frischluft oder klimatisierter Luft ist unter klimatechnischen Gesichtspunkten bei kleineren Kraftfahrzeugen unbefriedigend, da sich warme Luft aufgrund ihrer Tendenz, nach oben zu steigen, im Kopfbereich der Insassen staut, während kühlere Frischluft oder klimatisierte Luft erst gar nicht in den Kopfbereich der Insassen gelang, sondern nach ihrem Austritt auf den Bodenbereich absinkt.

Zwar wäre es möglich, die Frischluft oder klimatisierte Luft mit hoher Austrittsgeschwindigkeit aus den Düsen in den Kopfbereich zu blasen, diese "Zugluft" wird jedoch als sehr unangenehm empfunden, so daß eine solche Behelfslösung nicht zu einer Erhöhung des Komforts führt.

Im Gegensatz zu großräumigen Fahrzeugen ist es aber bei kleineren Fahrzeugen nicht möglich, Luftschläuche zwischen dem Autohimmel und dem Dach unterzubringen, wie sie von den vorgenannten großräumigen Fahrzeugen her bekannt sind.

Der Erfindung liegt die Aufgabe zugrunde, einen Autohimmel der eingangs genannten Art so auszugestalten, daß auch im Kopfbereich der Insassen eine optimale Lüftung und Klimatisierung des Fahrzeuginnenraumes erzielt wird, ohne daß der Innenraum durch zu große Abstände des Autohimmels vom Fahrzeugdach unerwünscht verkleinert wird.

Diese Aufgabe wird bei einem Autohimmel nach dem Oberbegriff des Anspruchs 1 durch die im kennzeichnenden Teil angegebenen Merkmale gelöst.

Der Erfindung liegen folgende Überlegungen zugrunde. Um eine optimale Lüftung und Klimatisierung des Fahrzeuginnenraumes im Kopfbereich der Insassen zu erzielen, muß Frischluft oder klimatisierte Luft zu Austrittsöffnungen im Autohimmel geführt werden. Dabei wird angestrebt, daß eine große Luftmenge pro Zeiteinheit gefördert wird, diese aber nur eine geringe Strömungsgeschwindigkeit aufweisen darf, damit die Insassen weder durch "Zugluft" noch durch Strömungsgeräusche belästigt werden.

Der erfindungsgemäße Aufbau des Autohimmels ermöglicht es, diese Anforderungen zu erfüllen. Die einerseits durch das Verkleidungselement und andererseits durch das Kammerelement begrenzte Luftkammer kann sich durch eine entsprechende Anordnung der Flanschbereiche des Kammerelementes an den seitlichen Rändern des Verkleidungselement nahezu über die gesamte Fläche des Autohimmels erstrecken, wodurch selbst bei einem geringen Abstand zwischen dem Verkleidungselement und dem Kammerelement ein großen Volumen entsteht. Die in die so gestaltete Luftkammer einströmende Luft wird in ihrer Strömungsgeschwindigkeit zunächst reduziert, ehe sie die Luftkammer über die Luftöffnungen verläßt und in den Fahrzeuginnenraum übertritt.

Da im Zuge der Beruhigung der Luft in der Luftkammer auch ein Druckausgleich stattfindet, werden alle Luftöffnungen gleichmäßig versorgt. Im Gegensatz zu einem Belüftungssystem, bei dem die Luft über Luftschläuche mit engem Querschnitt und großer Strömungsgeschwindigkeit zu den Luftöffnungen geführt wird und daher besondere Luftleit- und druckabhängige Drosselmaßnahmen erforderlich sind, um unterschiedlich angeordnete Luftöffnungen gleichmäßig zu versorgen, kommt die erfindungsgemäße Lösung prinzipiell ohne solche Maßnahmen aus. Dadurch ergeben sich erhebliche Kosten- und Gewichtsvorteile.

Die durch den mehrschichtigen Aufbau des Verkleidungselementes und des Kammerelementes erzielten stabilen mechanischen Eigenschaften sorgen außerdem dafür, daß trotz geringer Gesamtdicke der beiden Elemente die die Luftkammer begrenzenden Bereiche selbsttragend und auch ohne Stützen ausreichend steif sind. Dadurch lassen sich extrem flache Luftkammern mit konstantem Querschnitt und geringer Gesamtdicke herstellen. In diesem Zusammenhang ist hervorzuheben, daß der Autohimmel aus dem Verkleidungselement und dem Kammerelement als komplett vorgefertigtes Einbauelement von der Zulieferindustrie an das Kraftfahrzeugmontagewerk geliefert und dort eingesetzt werden kann.

Da der Autohimmel von seiner primären Funktion her ein weitgehend ebenes, nur sanfte Krümmungen aufweisendes Bauteil darstellt und das Kammerelement der Form des Autohimmels angepaßt ist, erhalten auch die Wände der Luftkammer eine glatte, nur sanfte Krümmungen aufweisende und daher besonders strömungsgünstige Form. Diese Eigenschaft ist mit Luftschläuchen nicht zu erreichen.

Eine weitere wichtige Voraussetzung für eine optimale Lüftung und Klimatisierung des Fahrzeuginnenraumes besteht darin, daß die Temperatur der Frischluft oder klimatisierten Luft auf dem Wege von der Quelle, also den Frischlufteintrittsöffnungen in der Fahrzeugkarosserie, dem Klimagerät oder der Heizung, zu den Luftöffnungen konstant gehalten wird. Dies erreicht die Erfindung dadurch, daß die mittlere Trägerschicht des Verkleidungselementes und des Kammerelementes aus geschäumtem Kunststoff besteht und so eine gute Wärmeisolierung besitzt. Gleichzeitig wird hierdurch auch die Bildung von Kondenswasser am Verkleidungselement und am Kammerelement verhindert. Dieses Kondenswasser würde sonst in den Fahrzeuginnenraum tropfen.

Bis auf die zusätzliche Dekorschicht des Verkleidungselementes können das Verkleidungselement und das Kammerelement völlig identisch aufgebaut sein. Dadurch ergeben sich identische physikalische Eigenschaften. Die im Fahrzeuginnenraum herrschenden Temperaturen, die von - 30 °C bis + 80 °C reichen können, rufen an beiden Elementen die gleichen Dehnungen oder Schrumpfungen hervor. An ihren gemeinsamen Verbindungsstellen sind die Elemente daher stets spannungsfrei.

Eine Weiterbildung der Erfindung sieht vor, daß die beidseitig der Trägerschicht angeordneten weiteren ebenfalls verformbaren Schichten des Verkleidungselementes und des Kammerelementes jeweils aus Kunststoffolie bestehen.

Diese Schichten schaffen zusätzlich eine Dampf- und Feuchtigkeitssperre. Dadurch wird sowohl ein Eindringen von Feuchtigkeit in die Trägerschicht verhindert, die eine Verschlechterung ihrer Wärmeisolationseigenschaften bewirken würde, als auch ein Vordringen von Feuchtigkeit in den Zwischenraum zwischen dem Fahrzeugdach und dem Autohimmel. Auch diese Feuchtigkeit würde nämlich in den Fahrzeuginnenraum tropfen.

Alternativ können die beidseitig der Trägerschicht angeordneten weiteren ebenfalls verformbaren Schichten des Verkleidungselementes und des Kammerelementes jeweils aus einem Laminat mit einem Schichtenaufbau Kunststoffolie - Glasvlies-Schicht - Kunststoffolie bestehen.

Die Glasvlies-Schicht erhöht hier zusätzlich die mechanische Steifigkeit und beugt so einer eventuellen Vibrationsneigung des Verkleidungselementes im Bereich der Luftkammer vor.

Bei einer praktischen Ausgestaltung der Erfindung ist das Kammerelement an den Flanschbereichen über eine Klebeschicht mit dem Verkleidungselement verbunden. Alternativ kann die Verbindung auch durch eine Reib- oder Ultraschallschweißnaht realisiert sein.

Diese Verbindungsart ist in der Herstellung einfach durchzuführen und zeichnet sich gegenüber mechanischen Befestigungselementen dadurch aus, daß sie vollflächig ausgebildet sein kann und so vollständig luft- und feuchtigkeitsdicht ist und von der Dekorseite des Autohimmels betrachtet keine optischen Störstellen zeigt.

Wenn die durch die Erfindung eröffnete Möglichkeit genutzt wird, das Verkleidungselement und das Kammerelement mit Ausnahme der Dekorschicht des Verkleidungselementes völlig identisch aufzubauen, so daß die gemeinsamen Verbindungsstellen stets spannungsfrei sind, werden auf die Klebeschicht keinerlei Scherkräfte ausgeübt. Bei der Auswahl des Klebers ist man dann nicht dahingehend eingeschränkt, nur einen dauerelastischen Kleber verwenden zu müssen.

Das Kammerelement kann mit dem Fahrzeugdach verklebt oder über mechanische Befestigungselemente, insbesondere Klipse oder Klettbänder, verbunden sein.

Bei dieser Lösung dient das Kammerelement gleichzeitig als Befestigungselement und Abstandshalter für den Autohimmel. Weiterhin wird durch die Möglichkeit einer flächigen Verbindung das Fahrzeugdach mit für die Steifigkeit des Kammerelements und des Verkleidungselements und damit auch für die Luftkammer ausgenutzt. Auch umgekehrt wirkt sich das Kammerelement dann versteifend auf das Fahrzeugdach aus. So kann gegebenenfalls die Schichtdicke des Kammerelements, des Verkleidungselements und des Fahrzeugdachs reduziert werden, um die gleiche Steifigkeit zu erreichen, die eine freitragende Konstruktion des Autohimmels und des Fahrzeugdachs hätten.

Bei einer bevorzugten Ausgestaltung sind die Luftöffnungen als eine Vielzahl von Löchern mit kleinem Querschnitt in dem Verkleidungselement ausgeführt, die über eine große Fläche verteilt sind.

Diese Ausgestaltung nutzt in vorteilhafter Weise die oben beschriebene Eigenschaft der Luftkammer als Beruhigungskammer aus, gemäß der alle Luftöffnungen ohne besondere Luftleit- und druckabhängige Drosselmaßnahmen gleichmäßig mit Luft versorgt werden. Das Verkleidungselement des Autohimmels wirkt dann als Rieseldecke für die Frischluft oder klimatisierte Luft.

Alternativ können die Luftöffnungen in den Wänden ausgeformter Sicken oder Mulden des Verkleidungselementes angeordnet und mit verschließbaren Austrittsdüsen versehen sein.

Durch diese Maßnahme kann der Luftaustritt gezielter über den Sitzplätzen erfolgen. Durch die Neigung der Wandbereiche der Sicken oder Mulden kann bereits die Richtung vorgegeben werden, in die der aus den Luftöffnungen ausströmende Luftstrom in den Fahrzeuginnenraum übertritt. Dies erübrigt eine spezielle plastische Ausgestaltung der Düsen und vermindert so die Unfallgefahr durch aus dem Verkleidungselement herausragender Teile. Auch hier erübrigen sich besondere Luftleit- und druckabhängige Drosselmaßnahmen bevor die Luft die Austrittsdüsen verläßt, da die Luftkammer bereits für einen Druckausgleich sorgt.

Statt einer Luftkammer lassen sich aber auch Luftkanäle im Kammerelement ausbilden, die von einem gemeinsamen Sammelkanal zu Stichkanälen abzweigen. Die Luftkanäle weisen jeweils einen Kanalquerschnitt auf, der bei den Stichkanälen etwa der Summe der Mündungsquerschnitte der zugeordneten Luftöffnungen entspricht und bei den Sammelkanälen etwa der Summe der Kanalquerschnitte der Stichkanäle.

Hierdurch werden auch bei kleineren Volumina konstante Strömungs- und Druckverhältnisse im Luftkanal sichergestellt, wodurch sich die Luftmenge, die aus den einzelnen Luftöffnungen austritt, ebenfalls konstant halten läßt. Sind z. B. alle Luftöffnungen geöffnet, so werden auch alle gleichmäßig mit Luft versorgt, d. h. eine Bevorzugung der am Anfang der Luftkanäle liegenden Luftöffnungen findet nicht statt.

Außerdem ist vorgesehen, daß die Luftkanäle flache Kanalquerschnitte konstanter Tiefe aufweisen. Ihre Breite ist nach der Summe der Mündungsquerschnitte der zugeordneten Luftöffnungen abgestuft.

Mit dieser Maßnahme wird der zur Verfügung stehende Zwischenraum zwischen dem Verkleidungselement und der Karosserie optimal für die Unterbringung von Luftkanälen ausgenutzt. Der notwendige Kanalquerschnitt wird also über die Breite des Profils bei vorgegebener Tiefe hergestellt.

Weiterbildungen und vorteilhafte Ausgestaltungen des Autohimmels ergeben sich aus den Ansprüchen, der weiteren Beschreibung und der Zeichnung, die ein Ausführungsbeispiel veranschaulicht. In der Zeichnung zeigen:
- Fig. 1: einen Querschnitt durch einen Autohimmel nach der Erfindung mit einer Vielzahl von Luftöffnungen kleinen Offnungsquerschnitts,
- Fig. 2: einen Detailquerschnitt aus Fig. 1,
- Fig. 3: einen Querschnitt durch einen Autohimmel nach der Erfindung mit in Mulden des Verkleidungselementes angeordneten Luftöffnungen und mit verschließbaren Austrittsdüsen und
- Fig. 4: eine Draufsicht auf die Rückseite eines Autohimmels im Bereich von Luftkanälen.

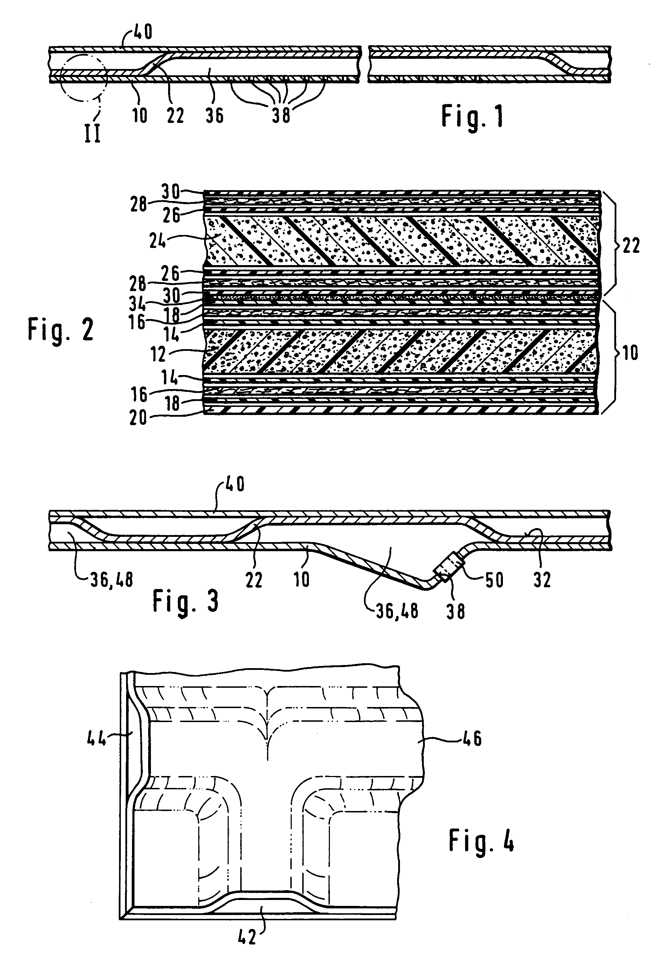

In Fig. 1 ist ein Querschnitt durch einen Autohimmel einer ersten Ausführung dargestellt. Der Autohimmel besteht aus einem mehrschichtigen Verkleidungselement 10 und einem ebenfalls mehrschichtigen Kammerelement 22.

Das Kammerelement 22 ist an Flanschbereichen 32 mit dem Verkleidungselement 10 verbunden, so daß beide Elemente gemeinsam eine Luftkammer 36 begrenzen. Die Luftkammer 36 mündet in Luftöffnungen 38, die im Verkleidungselement 10 ausgespart sind. Bei der in Fig. 1 gezeigten Ausführung sind die Luftöffnungen 38 als eine Vielzahl von Löchern mit kleinem Querschnitt im Verkleidungselement 10 ausgebildet. Die Löcher sind dabei über eine große Fläche verteilt und das Verkleidungselement 10 des Autohimmels bildet eine Rieseldecke für Frischluft oder klimatisierte Luft, die von einem Lüfter oder einem Klimagerät gefördert wird. Der so aufgebaute Autohimmel ist im Fahrzeug derart befestigt, daß das Kammerelement 22 mit dem Fahrzeugdach 40 verklebt oder über mechanische Befestigungselemente, wie Klipse oder Klettbänder befestigt ist.

Wie Fig. 2 erkennen läßt, umfaßt das Verkleidungselement 10 eine verformbare mittlere Trägerschicht 12 aus geschäumtem Kunststoff. Als Kunststoff dient Poyurethan-Schaum. Zu beiden Seiten der Trägerschicht 12 sind weitere verformbare Schichten angeordnet. Es handelt sich jeweils um ein Laminat mit einem Schichtenaufbau Kunststoffolie 14 - Glasvlies-Schicht 16 - Kunststoffolie 18, wobei die Kunststoffolien aus Polyethylen bestehen. Ferner ist noch auf der zum Fahrzeuginnenraum weisenden Seite eine Dekorschicht 20 vorhanden.

Auf der dem Fahrzeuginnenraum abgewandten Seite des Verkleidungselementes 10 ist ein mehrschichtiges Kammerelement 22 angeordnet. Dieses ist mit Ausnahme der Dekorschicht ähnlich wie das Verkleidungselement 10 aufgebaut. Es umfaßt ebenfalls eine verformbare mittlere Trägerschicht 24 aus geschäumtem Kunststoff, nämlich Polyurethan-Schaum. Zu beiden Seiten der Trägerschicht 24 sind ebenfalls weitere verformbare Schichten in Form von Laminaten mit einem Schichtenaufbau Kunststoffolie 26 - Glasvlies-Schicht 28 - Kunststoffolie 30 angeordnet. An Flanschbereichen 32 ist das Kammerelement 22 über eine Klebeschicht 34 mit dem Verkleidungselement 10 verklebt.

Durch die Mitbenutzung des Verkleidungselementes 10 für die Begrenzung der Luftkammer 36 und die Verwendung eines ähnlich wie das Verkleidungselement 10 aufgebauten Kammerelementes 22 läßt sich eine extrem geringe Bauhöhe des Autohimmels bei ausreichendem Querschnitt und Volumen der Luftkammer 36 erzielen. Weiterhin ist eine unmittelbare Befestigung des Autohimmels am Fahrzeugdach 40 durch eine Verklebung oder mechanische Befestigungsmittel, wie Klipse oder Klettbänder möglich, da eine ausreichend große Verbindungsfläche zur Verfügung steht.

Die aus geschäumtem Kunststoff bestehende mittlere Trägerschicht 12 bzw. 24 bewirkt eine gute Wärmeisolierung, die dafür sorgt, daß sowohl die in die Luftkammer 36 geförderte Luft ihre Temperatur hält als auch eine Kondenswasserbildung vermieden wird. Die aus Polyethylen bestehenden Kunststoffolien 14, 18 bzw. 26, 30 sind dampf- und feuchtigkeitsundurchlässig und verhindern sowohl einen Übertritt von Feuchtigkeit in die Trägerschicht 12 bzw. 24 als auch ein Vordringen in den Raum zwischen dem Kammerelement 22 und dem Fahrzeugdach 40.

Bei der in Fig. 3 dargestellten zweiten Ausführung eines Autohimmels sind Luftöffnungen 38 mit wesentlich größerem Öffnungsquerschnitt im Vergleich zu Fig. 1 in Wänden ausgeformter Sicken oder auch Mulden des Verkleidungselementes 10 angeordnet. In den Luftöffnungen 38 befinden sich Austrittsdüsen 50, mit denen die Luftöffnungen 38 bei Bedarf verschlossen werden können.

Fig. 4 zeigt eine Draufsicht auf die Rückseite eines Autohimmels in einer Ausführung, bei der Luftkanäle 48 im Kammerelement 22 ausgebildet sind. Sollen über die Luftkanäle 48 mehrere Luftöffnungen 38 versorgt werden, die auch räumlich getrennt voneinander liegen, so kann die Luft zunächst über einen gemeinsamen Sammelkanal 42 zugeführt werden, der dann zu Stichkanälen 44 und 46 abzweigt. Dabei weisen die Luftkanäle 48 jeweils einen Kanalquerschnitt auf, der bei den Stichkanälen 44 und 46 etwa der Summe der Mündungsquerschnitte der zugeordneten Luftöffnungen 38 entspricht und bei dem Sammelkanal 42 etwa der Summe der Kanalquerschnitte der Stichkanäle 44, 46.

Die Luftkanäle 48 weisen flache Kanalquerschnitte konstanter Tiefe auf. Ihre Breite richtet sich nach der Zahl der zugeordneten Luftöffnungen 38, so daß also der Querschnitt jeweils proportional zur geförderten Luftmenge ist.

## Patentansprüche

1. Autohimmel für die Dachinnenverkleidung eines Personenkraftfahrzeugs oder Kleinbusses, welcher ein mehrschichtiges Verkleidungselement mit (10) einer verformbaren mittleren Trägerschicht (12) aus geschäumtem Kunststoff, mit beidseitig der Trägerschicht (12) angeordneten weiteren ebenfalls verformbaren Schichten (14, 16, 18) und mit einer zum Fahrzeuginnenraum weisenden Dekorschicht (20) umfaßt, dadurch gekennzeichnet, daß auf der dem Fahrzeuginnenraum abgewandten Seite des Verkleidungselementes (10) ein mehrschichtiges Kammerelement (22) mit einer verformbaren mittleren Trägerschicht (24) aus geschäumtem Kunststoff mit beidseitig der Trägerschicht (24) angeordneten weiteren ebenfalls verformbaren Schichten (26, 28, 30) angeordnet ist, an Flanschbereichen (32) mit dem Verkleidungselement (10) verbunden ist und gemeinsam mit dem Verkleidungselement (10) eine oder mehrere Luftkammern (36) begrenzt und die Luftkammern (36) in Luftöffnungen (38) münden, die im Verkleidungselement (10) ausgespart sind.

2. Autohimmel nach Anspruch 1, dadurch gekennzeichnet, daß die beidseitig der Trägerschicht (12; 24) angeordneten weiteren ebenfalls verformbaren Schichten (14; 26) des Verkleidungselementes (10) und des Kammerelementes (22) jeweils aus Kunststoffolie bestehen.

3. Autohimmel nach Anspruch 1, dadurch gekennzeichnet, daß die beidseitig der Trägerschicht (12; 24) angeordneten weiteren ebenfalls verformbaren Schichten (14, 16, 18; 26, 28, 30) des Verkleidungselementes (10) und des Kammerelementes (22) jeweils aus einem Laminat mit einem Schichtenaufbau Kunststoffolie (14; 26) - Glasvlies-Schicht (16; 28) - Kunststoffolie (18; 30) bestehen.

4. Autohimmel nach einem oder mehreren der Ansprüche 1 bis 3, dadurch gekennzeichnet, daß die Trägerschicht (12; 24) des Verkleidungselementes (10) und des Kammerelementes (22) aus Poyurethan-Schaum und die Kunststoffolien (14, 18; 26, 30) aus Polyetylen bestehen.

5. Autohimmel nach einem oder mehreren der Ansprüche 1 bis 4, dadurch gekennzeichnet, daß das Kammerelement (22) an den Flanschbereichen (32) über eine Klebeschicht (34) mit dem Verkleidungselement (10) verbunden ist.

6. Autohimmel nach einem oder mehreren der Ansprüche 1 bis 4, dadurch gekennzeichnet, daß das Kammerelement (22) an den Flanschbereichen (32) über eine Reib- oder Ultraschallschweißnaht mit dem Verkleidungselement (10) verbunden ist.

7. Autohimmel nach einem oder mehreren der Ansprüche 1 bis 6, dadurch gekennzeichnet, daß das Kammerelement (22) mit dem Fahrzeugdach (40) verklebt oder über mechanische Befestigungselemente, insbesondere Klipse oder Klettbänder, verbunden ist.

8. Autohimmel nach einem oder mehreren der Ansprüche 1 bis 7, dadurch gekennzeichnet, daß die Luftöffnungen (38) als eine Vielzahl von Löchern mit kleinem Querschnitt in dem Verkleidungselement (10) ausgeführt sind, die über eine große Fläche verteilt sind.

9. Autohimmel nach einem oder mehreren der Ansprüche 1 bis 7, dadurch gekennzeichnet, daß die Luftöffnungen (38) in den Wänden ausgeformter Sicken oder Mulden des Verkleidungselementes (10) angeordnet und mit verschließbaren Austrittsdüsen (50) versehen sind.

10. Autohimmel nach einem oder mehrerer der Ansprüche 1 bis 8, dadurch gekennzeichnet, daß Luftkanäle (48) im Kammerelement (22) ausgebildet sind, die von einem gemeinsamen Sammelkanal (42) zu Stichkanälen (44, 46) abzweigen und daß die Luftkanäle (36) jeweils einen Kanalquerschnitt aufweisen, der bei den Stichkanälen (44, 46) etwa der Summe der Mündungsquerschnitte der zugeordneten Luftöffnungen (38) entspricht und bei den Sammelkanälen (42) etwa der Summe der Kanalquerschnitte der Stichkanäle (44, 46).

11. Autohimmel nach Anspruch 9 oder 10, dadurch gekennzeichnet, daß die Luftkanäle (36) flache Kanalquerschnitte konstanter Tiefe aufweisen und daß ihre Breite nach der Summe der Mündungsquerschnitte der zugeordneten Luftöffnungen (38) abgestuft ist.

## Claims

1. Headliner for the roof internal lining of a passenger vehicle or small bus, which comprises a multilayer lining element having (10) a deformable middle support layer (12) of foamed plastics, with likewise deformable layers (14, 16, 18) disposed on either side of the support layer (12) and having a decorative layer (20) facing cowards the vehicle interior, characterized in that, on the side of the lining element (10) remote from the vehicle interior, a multilayer chamber element (22) having a deformable middle support layer (24) of foamed plastics with further, likewise deformable layers (26, 28, 30) disposed on either side of the support layer (24) is disposed, is connected at flange regions (32) to the lining element (10) and, together with the lining element (10), bounds one or more air chambers (36) and the air chambers (36) lead into air openings (38) which are formed in the lining element (10).

2. Headliner according to Claim 1, characterized in that the further likewise deformable layers (14; 26) disposed on either side of the support layer (12; 24) of the lining element (10) and of the chamber element (22) are each of plastics foil.

3. Headliner according to Claim 1, characterized in that the further likewise deformable layers (14, 16, 18; 26, 28, 30), disposed on either side of the support layer (12; 24), of the lining element (10) and of the chamber element (22) each consist of a laminate comprising a layered construction of plastics foil (14; 26) - glass fleece layer (16; 28) - plastics foil (18; 30).

4. Headliner according to one or more of Claims 1 to 3, characterized in that the support layer (12; 24) of the lining element (10) and of the chamber element (22) are of polyurethane foam and the plastics foils (14, 18; 26, 30) are of polyethylene.

5. Headliner according to one or more of Claims 1 to 4, characterized in that the chamber element (22) is connected to the lining element (10) at the flange regions (32) by an adhesive layer (34).

6. Headliner according to one or more of Claims 1 to 4, characterized in that the chamber element (22) is connected to the lining element (10) at the flange regions (32) by a friction-welded or ultrasonically welded seam.

7. Headliner according to one or more of Claims 1 to 6, characterized in that the chamber element (22) is glued to the vehicle roof (40) or is connected to it by mechanical fixing elements, especially clips or burr strips.

8. Headliner according to one or more of Claims 1 to 7, characterized in that the air openings (38) are constructed as a plurality of holes of small cross-section in the lining element (10), which are distributed over a large area.

9. Headliner according to one or more of Claims 1 to 7, characterized in that the air openings (38) are disposed in the walls of integrally formed corrugations or depressions of the lining element (10) and are provided with closable outlet nozzles (50).

10. Headliner according to one or more of Claims 1 to 8, characterized in that air channels (48) are formed in the chamber element (22), which (air channels) branch from a common header channel (42) to cross-channels (44, 46), and that the air channels (36) each have a channel cross-section which, in the case of the cross-channels (44, 46) is approximately equal to the sum of the outlet cross-sections of the associated air openings (38) and, in the case of the header channels (42), is approximately equal to the sum of the channel cross-sections of the cross-channels (44, 46).

11. Headliner according to Claim 9 or 10, characterized in that the air channels (36) have flat channel cross-sections of constant depth and that their width is stepped down according to the sum of the outlet cross-sections of the associated air openings (38).

## Revendications

1. Panneau de garniture intérieure de pavillon d'un véhicule de tourisme ou d'un petit bus, qui comprend un élément de garniture multicouche (10) comportant une couche support centrale déformable (12) en plastique expansé, d'autres couches également déformables (14, 16, 18) de chaque côté de la couche support (12), et une couche de décoration (20) du côté de l'espace intérieur du véhicule, caractérisé en ce que, sur le côté de l'élément de garniture (10) opposé à l'espace intérieur du véhicule, est disposé un élément chambre multicouche (22) comportant une couche support centrale déformable (24) en plastique expansé avec, de chaque côté de la couche support, d'autres couches également déformables (26, 28, 30), l'élément chambre (22) étant relié & l'élément de garniture (10) en des zones de brides (32) et délimitant, avec l'élément de garniture (10), une ou plusieurs chambres d'air (36) qui débouchent dans des ouies d'air (38) ménagées dans l'élément de garniture (10).

2. Panneau de pavillon suivant la revendication 1, caractérisé en ce que les autres couches également déformables (14; 26) de l'élément de garniture (10) et de l'élément chambre (22), qui sont respectivement disposées de chaque côté de la couche support (12; 24), sont en feuilles de plastique.

3. Panneau de pavillon suivant la revendication 1, caractérisé en ce que, de chaque côté des couches supports (12; 24), les autres couches également déformables (14, 16, 18; 26, 28, 30) de l'élément de garniture (10) et de l'élément chambre (22) sont fabriquées en un stratifié comportant une construction feuilletée - feuille de matière plastique (14; 26) - couche mat de fibres de verres (16; 28) - feuille de matière plastique (18; 30).

4. Panneau de pavillon suivant une ou plusieurs des revendications 1 à 3, caractérisé en ce que les couches supporte (12; 24) de l'élément de garniture (10) et de l'élément chambre (22) sont en mousse de polyuréthanne et les feuilles de matière plastique (14, 18; 26, 30) en polyéthylène.

5. Panneau de pavillon suivant une ou plusieurs des revendications 1 à 4, caractérisé en ce que l'élément chambre (22) est relié, dans les zones de brides (32), par une couche de colle (34) à l'élément de garniture (10).

6. Panneau de pavillon suivant une ou plusieurs des revendications 1 à 4, caractérisé en ce que l'élément chambre (22) est relié, dans les zones de brides (32) par soudure à friction ou à ultrasons à l'élément de garniture (10).

7. Panneau de pavillon suivant une ou plusieurs des revendications 1 à 6, caractérisé en ce que l'élément chambre (22) est collé au pavillon de voiture (40) ou relié à celui-ci par des éléments de fixation, en particulier des clips ou des bandes adhésives.

8. Panneau de pavillon suivant une ou plusieurs des revendications 1 à 7, caractérisé en ce que les ouies d'aération (38) sont réalisées sous la forme d'une pluralité de trous de petite section percés dans l'élément de garniture (10) et distribués sur une grande surface.

9. Panneau de pavillon suivant une ou plusieurs des revendications 1 à 7, caractérisé en ce que les ouies d'aération (38) sont disposées dans des moulures formées dans les parois ou des creux de l'élément de garniture (10) et sont pourvues de buses de sortie obturables (50).

10. Panneau de pavillon suivant une ou plusieurs des revendications 1 à 8, caractérisé en ce que, dans l'élément chambre (22), sont formés des canaux d'aération (48) qui sont dérivés d'un canal collectif commun (42) en canaux latéraux (44, 46) et en ce que les canaux d'aération (36) présentent respectivement une section qui correspond, en ce qui concerne les canaux latéraux (44, 46), à environ la somme des sections des ouies d'aération (38) qui leur sont affectées et, en ce qui concerne le canal collectif (42), à environ la somme des sections des canaux latéraux (44, 46).

11. Panneau de pavillon suivant la revendication 9 ou 10, caractérisé en ce que les canaux d'aération (36) présentent des sections aplaties de profondeur constante et en ce que leur largeur est étagée suivant la somme des sections des ouies d'aération (38) qui leur sont affectées.
